# EUROPÄISCHE PATENTSCHRIFT

(11) **EP 3 755 598 B1**
(45) Veröffentlichungstag und Bekanntmachung des Hinweises auf die Patenterteilung: **16.02.2022**
(21) Anmeldenummer: 19710320.3
(22) Anmeldetag: 28.02.2019
(51) Int. Cl.: B61C 17/04, B61D 27/00

(54) **BELÜFTUNGSMODUL FÜR EIN SCHIENENFAHRZEUG**
VENTILATION MODULE FOR A RAIL VEHICLE
MODULE DE VENTILATION POUR UN VÉHICULE FERROVIAIRE

(30) Priorität: 29.03.2018 DE 102018204871
(43) Veröffentlichungstag der Anmeldung: 30.12.2020
(73) Patentinhaber: Siemens Mobility GmbH, 81739 München (DE)
(72) Erfinder: DÜNNWALD, Tim, 80999 München (DE); EBERT, Frank, 81247 München (DE); PLINNINGER, Thomas, 83026 Rosenheim (DE); REISSING, Norbert, 93051 Regensburg (DE)
(86) Internationale Anmeldenummer: PCT/EP2019/054936
(87) Internationale Veröffentlichungsnummer: WO 2019/185275

(56) Entgegenhaltungen:
- EP-A1- 2 913 242
- WO-A1-01/85516
- WO-A1-2012/060139
- CN-A- 102 923 137
- CN-A- 103 010 224
- CN-A- 104 228 852
- CN-Y- 201 102 547
- ES-T3- 2 362 247

## Beschreibung

Die Erfindung betrifft ein Belüftungsmodul für ein Schienenfahrzeug und ein Schienenfahrzeug mit einem solchen Belüftungsmodul.

Schienenfahrzeuge werden in Regionen mit unterschiedlicher Luftqualität unter verschiedenen Umgebungsbedingungen eingesetzt. Im Betrieb benötigen die Schienenfahrzeuge Luft, beispielsweise als Kühlluft oder zur Bereitstellung von Sauerstoff für einen Verbrennungs-Antrieb. Die bereitgestellte Luft soll möglichst frei von Staub und anderen Partikeln sein, um einerseits eine Kühlung gewährleisten zu können und andererseits einen Verbrennung-Antrieb nicht mit Fremdstoffen zu belasten.

Ein spezielles Problem stellt der Betrieb eines Schienenfahrzeugs in Wüstenregionen dar, da Flugsand, beispielsweise aufgrund von Sandstürmen, aber auch aufgrund des Fahrtwindes des Schienenfahrzeuges, möglichst nicht in einen Maschinenraum gelangen soll.

Gelöst wird diese Aufgabe im Stand der Technik durch den Einbau von Wetterschutzgittern in einer Außenwand des Schienenfahrzeuges, welches eine erste Filterstufe bildet. Darüber hinaus sind Zyklonabscheider und Filterelemente bekannt, die als zweite und dritte Filterstufe wirken können und mit denen angesaugte Luft von Staub, Sand und Partikeln befreit werden kann, bevor die Luft in den Maschinenraum eintritt.

Zyklonabscheider und Filterelemente werden in einem Ansaugtrakt des Schienenfahrzeuges fest verbaut. Dadurch sind notwendige Wartungsarbeiten, beispielsweise das Tauschen von Filterelementen oder das Überprüfen und Reparieren von Lüftern im Ansaugtrakt, nur schwierig durchführbar, da hierzu das Schienenfahrzeug aus dem regulären Verkehr entfernt werden muss. Aus Druckschrift WO 2012/060139 A1 ist ein Eisenbahnwagen mit einer Kühlvorrichtung zum Kühlen einer elektrischen Ausrüstung bekannt.

Aus Druckschrift EP 2 913 242 A1 ist ein Filtersystem für Schienenklimageräte bekannt.

Aus Druckschrift ES 2 362 247 T3 ist eine Vorrichtung zur Luft-Vorbehandlung für den Innenraum einer Steuerstation eines Kraftfahrzeugs auf Schienen bekannt.

Aufgabe der vorliegenden Erfindung ist es, ein Belüftungskonzept für ein Schienenfahrzeug bereitzustellen, das einerseits die Anforderungen an eine gereinigte Ansaugluft für einen Maschinenraum erfüllt, und das andererseits wartungsfreundlich ist.

Gelöst wird die Aufgabe durch das Belüftungsmodul des unabhängigen Patentanspruchs. Vorteilhafte Ausgestaltungen der Erfindung sind Gegenstand von abhängigen Unteransprüchen.

Das erfindungsgemäße Belüftungsmodul für ein Schienenfahrzeug umfasst ein Gehäuse, eine erste Reinigungsstufe, eine zweite Reinigungsstufe, einen Staubaustragskanal, einen Staubaustragslüfter und einen Maschinenraumlüfter.

Das Gehäuse weist eine Oberseite, eine Unterseite, eine Vorderseite, eine Rückseite und zwei Seitenwände auf. Die Rückseite liegt der Vorderseite gegenüber. Ferner weist das Gehäuse einen Lufteinlass, einen Luftauslass und eine Staubaustragsöffnung auf.

Die erste Reinigungsstufe ist in einem oberen Bereich des Gehäuses, also der Oberseite des Gehäuses zugewandt, angeordnet. Die erste Reinigungsstufe weist einen Zyklonabscheider auf, der einen Staubauslass und einen Zyklonluftauslass aufweist. Zyklonabscheider, die auch Fliehkraftabscheider, Zyklonfilter oder Zyklon genannt werden können, dienen als Massenkraftabscheider, bei denen ein Luftstrom mit abzuscheidenden Partikeln in eine Wirbelströmung gebracht wird und durch die Wirbelströmung die Partikel vom Luftstrom aufgrund der Fliehkraft getrennt werden. Dadurch wird im Belüftungsmodul eine erste Reinigung der angesaugten Luft erzielt, da mittels des Zyklonabscheiders Staub und andere Partikel wie Sand aus der angesaugten Luft entfernt werden. Das Belüftungsmodul ist so aufgebaut, dass Luft, die über den Lufteinlass in das Belüftungsmodul gelangt, durch den Zyklonabscheider geführt wird. Die von Partikeln gereinigte Luft gelangt durch den Zyklonluftauslass, die entfernten Partikel werden über den Staubauslass abgegeben.

Die zweite Reinigungsstufe ist in einem mittleren Bereich des Gehäuses unterhalb der ersten Reinigungsstufe derart angeordnet, dass Luft vom Zyklonluftauslass zur zweiten Reinigungsstufe gelangen kann. Die zweite Reinigungsstufe weist einen Oberflächenfilter und/oder einen Tiefenfilter auf, der der Vorderseite des Gehäuses zugewandt ist. Der Oberflächenfilter kann dabei als Panelfilter oder Kompaktfilter, der Tiefenfilter als Taschenfilter ausgeführt sein.

Der Staubaustragskanal ist mit dem Staubauslass des Zyklonabscheiders verbunden und ebenfalls im mittleren Bereich des Gehäuses angeordnet. Der Staubaustragskanal ist der Rückseite des Gehäuses zugewandt. Durch den Staubaustragskanal werden die vom Zyklonabscheider aus der angesaugten Luft entfernten Partikel also an der zweiten Reinigungsstufe vorbeigeführt.

Der Staubaustragslüfter ist eingerichtet, Luft und Partikel, insbesondere Staub, aus dem Staubaustragskanal anzusaugen und durch die Staubaustragsöffnung aus dem Gehäuse zu entfernen.

Der Maschinenraumlüfter ist in einem unteren Bereich des Gehäuses unterhalb der zweiten Reinigungsstufe angeordnet und eingerichtet, Luft durch die zweite Reinigungsstufe anzusaugen und über den Luftauslass abzugeben. Durch den Maschinenraumlüfter wird die aus dem Zyklonluftauslass austretende Luft also durch die zweite Reinigungsstufe gesaugt.

Es kann vorgesehen sein, dass der Maschinenraumlüfter eingerichtet ist, Luft zusätzlich durch die erste Reinigungsstufe und/oder durch den Lufteinlass anzusaugen. Mittels des Maschinenraumlüfters kann ein Überdruck in einem Maschinenraum in einem Schienenfahrzeug erzeugt werden, um einen Staubeintrag über andere Öffnungen des Maschinenraums zu vermeiden.

Es kann vorgesehen sein, dass das Gehäuse Abmessungen von einem Meter auf einem Meter in der Grundfläche und eine Höhe von etwa eineinhalb bis zwei Meter aufweist. Durch solche Abmessungen ist das Belüftungsmodul für einen Einbau in ein Schienenfahrzeug geeignet.

Ein Schienenfahrzeug weist das Belüftungsmodul auf. Ferner ist der Lufteinlass mit einer Außenwand des Schienenfahrzeugs verbunden. Die Außenwand kann dabei eine Seitenwand und/oder ein Dachbereich des Schienenfahrzeuges sein. Dort wo die Außenwand mit dem Lufteinlass verbunden ist, kann die Außenwand ein Wetterschutzgitter aufweisen.

Das Belüftungsmodul kann in einem Maschinenraum des Schienenfahrzeugs angeordnet sein. Der Luftauslass kann dann mit dem Maschinenraum verbunden sein, während der Lufteinlass nicht mit dem Maschinenraum verbunden ist. Dies kann durch entsprechende Wände und Abdichtungen um das Belüftungsmodul erreicht werden. Werden die ober angegebenen Abmessungen für das Belüftungsmodul verwendet, kann das Belüftungsmodul mit der Rückseite an einer Außenwand des Schienenfahrzeugs angeordnet werden. Ein weiteres Modul gegenüberliegend angeordnet, welches ähnliche Abmessungen aufweist, ermöglicht einen Gang im Maschinenraum, der etwa sechzig Zentimeter breit ist und so für einige Wartungsarbeiten ausreichend sein kann.

Ferner kann das Belüftungsmodul Schäkel oder Ösen aufweisen, beispielsweise am Gehäuse, um das Belüftungsmodul in das Schienenfahrzeug zu heben oder aus diesem herauszubewegen. Zusätzlich können Befestigungsmittel vorgesehen sein, mit denen das Belüftungsmodul im Schienenfahrzeug befestigt wird.

In der ersten Reinigungsstufe können mehrere Zyklonabscheider angeordnet sein. In der zweiten Reinigungsstufe können mehrere Oberflächenfilter und/oder Tiefenfilter angeordnet sein. Ferner können mehrere Maschinenraumlüfter im unteren Bereich des Gehäuses angeordnet sein. Im Folgenden werden vorteilhafte Ausgestaltungen mit jeweils einem dieser Elemente beschrieben. Dabei sollen Ausgestaltungen mit einer Mehrzahl eines oder mehrerer dieser Elemente mitumfasst sein.

In einer Ausführungsform des Belüftungsmoduls ist der Zyklonabscheider ein Multizyklon mit mehreren, in einer Ebene angeordneten Axialabscheidern. Dadurch wird eine kompakte Bauform des Zyklonabscheiders möglich.

In einer Ausführungsform ist die Ebene des Multizyklons in einem Winkel von Null bis fünfundvierzig Grad gegenüber einer der beiden Seitenwände angeordnet. Dadurch kann Sand aufgrund seines Schüttwinkels einfach aus dem Multizyklon entfernt werden.

In einer Ausführungsform weist der Multizyklon ein Zyklongehäuse auf und ist an der Vorderseite des Gehäuses weiter oben angeordnet als an einer der Rückseite des Gehäuses zugewandten Zyklongehäuserückseite. Ferner weist das Zyklongehäuse einen Wasserauslass an der Zyklongehäuserückseite auf, der mit dem Staubaustragskanal verbunden ist. Dadurch kann der Zyklonabscheider zusätzlich zum Abscheiden von Wasser genutzt werden, wobei durch die Anordnung des Multizyklons Wasser innerhalb des Multizyklons schwerkraftbedingt zum Wasserauslass gelangt.

In einer Ausführungsform ist der Multizyklon beziehungsweise das Zyklongehäuse auf einer Montagehalterung angeordnet. Die Montagehalterung kann auf Montageflanschen im Gehäuse befestigt werden. Innerhalb des Gehäuses sind Führungsnasen angeordnet. Während der Befestigung der Montagehalterung kann diese auf den Führungsnasen abgelegt werden und anschließend in eine Montageposition gebracht werden. Dies vereinfacht die Montage.

In einer Ausführungsform weist das Gehäuse im mittleren Bereich einen Auflagerahmen für den Oberflächenfilter und/oder Tiefenfilter auf. Der Oberflächenfilter und/oder Tiefenfilter kann in den Auflagerahmen eingesetzt und dort fixiert werden. Die Fixierung kann mittels Klemmrahmen und/oder Schrauben erfolgen. In einer Ausführungsform weist der Auflagerahmen drei Auflageflächen auf, wobei die Auflageflächen in einem Rechteck mit einer fehlenden Seite angeordnet sind. Der Oberflächenfilter und/oder Tiefenfilter kann über die fehlende Seite in den Auflagerahmen eingeschoben werden. Die fehlende Seite kann dabei der Vorderseite des Gehäuses zugewandt sein.

In einer Ausführungsform nimmt eine erste Abmessung der zweiten Reinigungsstufe von der Vorderseite bis zum Staubaustragskanal zwischen vierzig und achtzig Prozent der Tiefe des Gehäuses ein. Die Tiefe des Gehäuses ist dabei die Abmessung des Gehäuses zwischen der Vorderseite und der Rückseite.

In einer Ausführungsform ist der Maschinenraumlüfter der Vorderseite des Gehäuses zugewandt und der Staubaustragslüfter der Rückseite des Gehäuses zugewandt. Ferner kann der Staubaustragslüfter zusätzlich ein Lüftergehäuse mit einer abgerundeten Außenwand aufweisen. In diesem Fall kann nach einem Ausbau des Maschinenraumlüfters ein Brett oder eine Platte in das Gehäuse eingelegt werden und der Staubaustragslüfter über das Brett oder die Platte aus dem Gehäuse gerollt werden.

In einer Ausführungsform umfasst das Gehäuse eine tragende Rahmenstruktur und Wandelemente. Die Wandelemente bilden die Oberseite, die Unterseite, die Vorderseite, die Rückseite und die Seitenwände des Gehäuses. Der Lufteinlass, der Luftauslass und die Staubaustragsöffnung sind in den Wandelementen angeordnet. Ansonsten ist das Gehäuse abgedichtet. Die Abdichtung kann dabei mittels Dichtungselementen erfolgen. Ferner können die Wandelemente mit der tragenden Rahmenstruktur verschweißt sein, wodurch auch eine Abdichtung realisiert werden kann.

Schäkel oder Ösen des Gehäuses können dann an der tragenden Rahmenstruktur angebracht werden.

In einer Ausführungsform sind Wandelemente der Vorderseite lösbar, um einen Zugriff in das Gehäuse zu ermöglichen. In einer Ausführungsform weist die tragende Rahmenstruktur eine der Vorderseite zugewandte entnehmbare Querstrebe auf. Dadurch wird der Zugang zum Gehäuse weiter vereinfacht. Die entnehmbare Querstrebe kann der Aussteifung der tragenden Rahmenstruktur dienen.

In einer Ausführungsform ist der Lufteinlass im oberen Bereich des Gehäuses angeordnet, insbesondere an der Oberseite und/oder an der Rückseite des Gehäuses. In einer Ausführungsform ist der Luftauslass an der Vorderseite des Gehäuses angeordnet. In einer Ausführungsform ist die Staubaustragsöffnung an der Unterseite des Gehäuses angeordnet.

In einer Ausführungsform ist das Belüftungsmodul eingerichtet, einen Volumenstrom von eineinhalb Kubikmeter Luft pro Sekunde bereitzustellen. Mittels der ersten Reinigungsstufe können mindestens fünfundachtzig Prozent eines vorgegebenen Teststaubs aus dem Volumenstrom entfernt werden. Die zweite Reinigungsstufe kann bei einer Druckänderung von maximal dreihundert Pascal mindestens dreihundert Gramm des vorgegebenen Teststaubs aufnehmen. Mit einem solchen Belüftungsmodul ist ein Schienenfahrzeug in Wüstenregionen betreibbar, wobei eine ausreichend lange Standzeit des Oberflächenfilters und/oder Tiefenfilters möglich ist. Durch die Verwendung besserer Zyklonabscheider und/oder besserer oder mehr Oberflächenfilter und/oder Tiefenfilter kann die Standzeit weiter verlängert werden. Als vorgegebener Teststaub kann dabei der als "ISO 12103-1 A4 grob" definierte Teststaub eingesetzt werden.

Es kann vorgesehen sein, dass Belüftungsmodul ohne die zweite Reinigungsstufe zu betreiben. Ferner kann vorgesehen sein, dass die erste Reinigungsstufe weggelassen wird. In diesem Fall kann auch der Staubaustragskanal, der Staubaustragslüfter und die Staubaustragsöffnung weggelassen werden.

Die oben beschriebenen Eigenschaften, Merkmale und Vorteile dieser Erfindung sowie die Art und Weise, wie diese erreicht werden, werden klarer und deutlicher verständlich durch die Erläuterung der folgenden stark vereinfachten schematischen Darstellungen bevorzugter Ausführungsbeispiele.

Hierbei zeigen in jeweils schematischer Darstellung
- FIG 1: einen Querschnitt durch ein erstes Belüftungsmodul;
- FIG 2: einen weiteren Querschnitt durch das erste Belüftungsmodul;
- FIG 3: einen Querschnitt durch ein zweites Belüftungsmodul;
- FIG 4: einen weiteren Querschnitt durch das zweite Belüftungsmodul;
- FIG 5: eine Zyklongehäuserückseite mit Wasserauslass;
- FIG 6: einen Multizyklon auf einer Montagehalterung;
- FIG 7: den Einbau des Multizyklons in das Gehäuse;
- FIG 8: einen Auflagerahmen für einen Oberflächenfilter;
- FIG 9: einen unteren Bereich eines Gehäuses mit Maschinenraumlüfter und Staubaustragslüfter;
- FIG 10: eine Draufsicht auf ein drittes Belüftungsmodul;
- FIG 11: eine Draufsicht auf das dritte Belüftungsmodul nach dem Entfernen von Wandelementen;
- FIG 12: einen Querschnitt durch ein Schienenfahrzeug mit einem Belüftungsmodul.

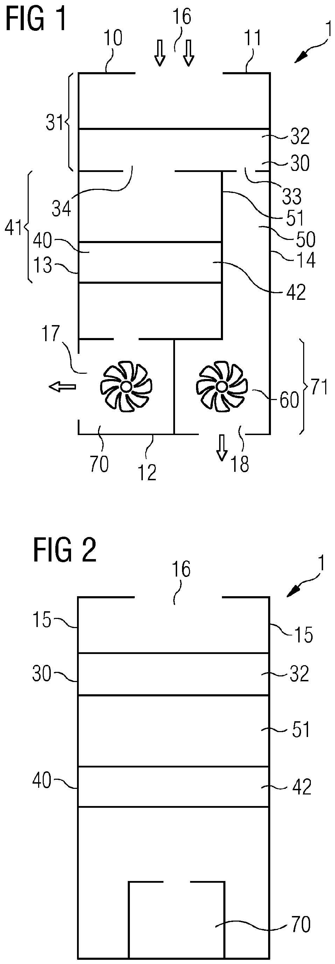

FIG 1 zeigt einen Querschnitt durch ein erstes Ausführungsbeispiel eines Belüftungsmoduls 1 für ein Schienenfahrzeug. Das Belüftungsmodul 1 weist ein Gehäuse 10 mit einer Oberseite 11 und einer Unterseite 12 auf. Der Querschnitt ist von einer Vorderseite 13 zu einer Rückseite 14 des Gehäuses 10 geführt. An der Oberseite 11 ist ein Lufteinlass 16, an der Vorderseite 13 ein Luftauslass 17 und an der Unterseite 12 eine Staubauslassöffnung 18 angeordnet.

Eine erste Reinigungsstufe 30 befindet sich in einem oberen Bereich 31 des Gehäuses 10. Die erste Reinigungsstufe 30 weist einen Zyklonabscheider 32 auf. Der Zyklonabscheider 32 weist einen Staubauslass 33 und einen Zyklonluftauslass 34 auf. Der Staubauslass 33 dient dabei der Abgabe eines Luftstroms mit den zu entfernenden Partikeln, während der Zyklonluftauslass 34 der Abgabe gereinigter Luft dient.

Eine zweite Reinigungsstufe 40 ist in einem mittleren Bereich 41 unterhalb der ersten Reinigungsstufe 30 derart angeordnet, dass Luft vom Zyklonluftauslass 34 zur zweiten Reinigungsstufe 40 gelangen kann. Die zweite Reinigungsstufe 40 weist einen Oberflächenfilter 42 und/oder einen Tiefenfilter 42 auf, der als Taschenfilter, Panelfilter oder Kompaktfilter ausgeführt sein kann, und der der Vorderseite 13 des Gehäuses 10 zugewandt ist.

Ferner ist im mittleren Bereich 41 des Gehäuses 10 ein Staubaustragskanal 50 angeordnet, der der Rückseite 14 des Gehäuses zugewandt ist. Eine Kanalzwischenwand 51 trennt den Staubaustragskanal 50 von der zweiten Reinigungsstufe 40. Der Staubaustragskanal 50 ist mit dem Staubauslass 33 des Zyklonabscheiders 32 verbunden.

Ein Staubaustragslüfter 60 ist mit dem Staubaustragskanal 50 verbunden und eingerichtet, Luft und Staub aus dem Staubaustragskanal 50 anzusaugen und durch die Staubaustragsöffnung 18 aus dem Gehäuse zu entfernen.

Ein Maschinenraumlüfter 70 ist in einem unteren Bereich 71 des Gehäuses 10 unterhalb der zweiten Reinigungsstufe 40 angeordnet. Der Maschinenlüfter 70 ist eingerichtet, Luft durch den Oberflächenfilter 42 und/oder Tiefenfilter 42 anzusaugen und über den Luftauslass 17 abzugeben.

Luft, vermengt mit Partikeln, insbesondere Staub, tritt über den Lufteinlass 16 in das Belüftungsmodul 1 ein. In der ersten Reinigungsstufe 30 erfolgt eine erste Reinigung der eingetretenen Luft, wobei Partikel mittels des Zyklonabscheiders 32 abgetrennt werden. Die abgetrennten Partikel gelangen über den Staubauslass 33, den Staubaustragskanal 50 und den Staubaustragslüfter 60 zur Staubaustragsöffnung 18. Ein geringerer Anteil der in der über den Lufteinlass 16 eintretenden Partikel kann den Zyklonabscheider 32 jedoch in Richtung Zyklonluftauslass 34 verlassen. Diese Partikel werden von der zweiten Reinigungsstufe 40 und insbesondere dem Oberflächenfilter 42 und/oder Tiefenfilter 42 aus dem Luftstrom entfernt. Dadurch kann gereinigte Luft durch den Maschinenraumlüfter 70 über den Luftauslass 17 abgegeben werden.

Durch die Kanalzwischenwand 51 sind der mittlere Bereich 41 und der untere Bereich 71 in zwei voneinander getrennte Strömungsbereiche aufgeteilt, wobei ein Strömungsbereich dem weiteren Reinigen der Luft in der zweiten Reinigungsstufe 40 und dem anschließenden Bereitstellen von gereinigter Luft dient und der andere Strömungsbereich dem Entfernen der Patikel über den Staubaustragskanal 50 und den Staubaustragslüfter 60 dient.

FIG 2 zeigt einen Querschnitt durch das Belüftungsmodul 1 der FIG 1, wobei die Schnittebene senkrecht zur Schnittebene der FIG 1 steht. Der Querschnitt erstreckt sich zwischen zwei Seitenwänden 15 des Gehäuses 10 und verläuft durch den Zyklonabscheider 32, den Oberflächenfilter 42 und/oder Tiefenfilter 42 und den Maschinenraumlüfter 70.

Der Zyklonabscheider 32 liegt im Ausführungsbeispiel der FIG 1 und 2 waagrecht, wodurch ein möglichst geringer Einbauraum benötigt wird. Der Zyklonabscheider 32 kann als Multizyklon mit mehreren, in einer Ebene angeordneten, Axialabscheidern ausgeführt sein.

Es kann vorgesehen sein, dass das Gehäuse 10 Abmessungen von einem Meter auf einem Meter in der Grundfläche und eine Höhe von etwa eineinhalb bis zwei Meter aufweist. Durch solche Abmessungen ist das Belüftungsmodul 1 für einen Einbau in ein Schienenfahrzeug geeignet.

In den FIG 1 und 2 ist der Staubaustragslüfter 60 im unteren Bereich 71 angeordnet. Es ist jedoch ebenfalls möglich, den Staubaustragslüfter 60 an anderer Stelle, beispielsweise im mittleren Bereich 41 anzuordnen.

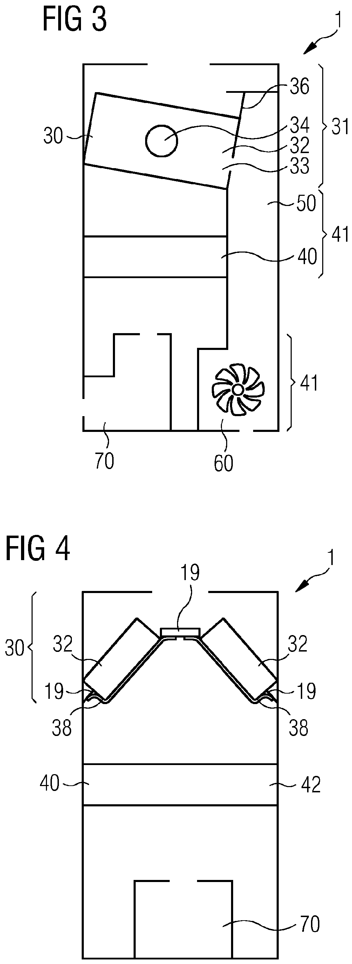

FIG 3 und 4 zeigen Querschnitte durch ein zweites Ausführungsbeispiel eines Belüftungsmoduls 1, welches dem Belüftungsmodul der FIG 1 und 2 entspricht, sofern im Folgenden keine Unterschiede beschrieben sind.

Die erste Reinigungsstufe 30 ist in diesem Ausführungsbeispiel anders aufgebaut. Die erste Reinigungsstufe 30 umfasst zwei Zyklonabscheider 32, die jeweils als Multizyklon mit mehreren, in einer Ebene angeordneten, Axialabscheidern ausgeführt sind. Die Zyklonabscheider 32 sind jeweils auf einer Montagehalterung 38 angeordnet und die Montagehalterung 38 jeweils am Gehäuse 10 befestigt. Ferner weist die Ebene der Axialabscheider einen Winkel von 45 Grad zu den Seitenwänden 15 auf und die Zyklonabscheider 32 sind Achsensymmetrisch zueinander angeordnet. Die Zyklonabscheider 32 können auch in einem kleineren Winkel, bis hin zu Null Grad gegenüber den Seitenwänden 15 angeordnet sein. Durch die schräge Anordnung der Zyklonabscheider 32 wird die Fähigkeit, Partikel aus dem Luftstrom zu extrahieren, insgesamt verbessert.

In FIG 3 dargestellt ist, dass die Zyklonabscheider 32 an der Vorderseite 13 des Gehäuses 10 weiter oben angeordnet sind als an einer Zyklongehäuserückseite 36, die der Rückseite 14 des Gehäuses 10 zugewandt ist. Alternativ kann vorgesehen sein, den Zyklonabscheider 32 an der Vorderseite 13 und der Zyklongehäuserückseite 36 in derselben Höhe anzubringen.

In FIG 4 dargestellt ist, dass die Montagehalterung 38 jeweils an zwei Montageflanschen 19 des Gehäuses 10 anliegt. Dort können Befestigungsmittel eingesetzt werden, um die Montagehalterung 38 am Gehäuse 10 zu befestigen.

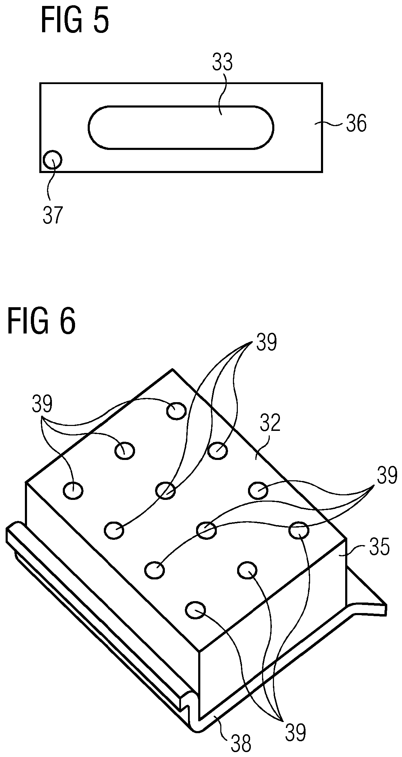

FIG 5 zeigt eine Draufsicht auf die Zyklongehäuserückseite 36 eines der Zyklonabscheider 32 der FIG 3. Die Zyklongehäuserückseite 36 weist den Staubauslass 33 und zusätzlich in einer Ecke einen Wasserauslass 37 auf. Der Wasserauslass 37 kann mit dem Staubaustragskanal 50 verbunden werden. Dies führt insbesondere beim schrägen Einbau des Zyklonabscheiders 32, wie in FIG 3 dargestellt, dazu, dass sich im inneren des Zyklonabscheiders 32 ansammelndes Wasser über den Wasserauslass 37 ebenfalls an den Staubaustragskanal 50 abgegeben werden kann. Dadurch wird die Reinigungsleistung der ersten Reinigungsstufe 30 weiter verbessert.

Es kann vorgesehen sein, dass der Staubauslass 33 und der Wasserauslass 37 in einer gemeinsamen Öffnung der Zyklongehäuserückseite 36 realisiert sind.

Alternativ kann auch kein Wasserauslass 37 vorgesehen sein. Dann kann der Zyklonabscheider 32 auch ohne die schräge Anordnung der FIG 3 eingebaut werden.

Alternativ oder zusätzlich kann eine Wasserabsaugung über den Staubaustragskanal 50 erfolgen, bei der Stellen im Gehäuse 10, an denen sich schwerkraftbedingt Wasser sammeln kann, mittels einer Leitung an den Staubaustragskanal 50 angeschlossen sind. Dies kann beispielsweise unterhalb des Zyklonabscheiders 32 und/oder an der Montagehalterung 38 und/oder den Montageflanschen 19 realisiert sein.

FIG 6 zeigt eine Detailansicht eines Zyklonabscheiders 32, der auf einer Montagehalterung 38 angeordnet ist und als Multizyklon mit mehreren, in einer Ebene angeordneten, Axialabscheidern 39 ausgeführt ist. Dadurch wird eine kompakte Bauform des Zyklonabscheiders 32 innerhalb eines Zyklongehäuses 35 erreicht.

Es kann vorgesehen sein, dass die Montagehalterung 38 und das Zyklongehäuse 35 einstückig ausgeführt sind.

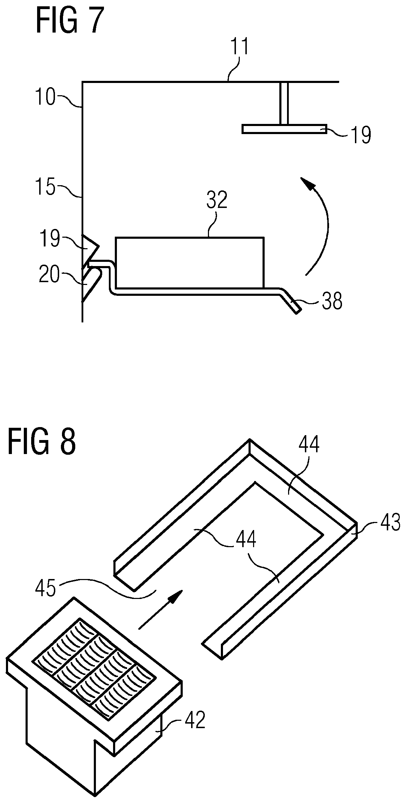

FIG 7 zeigt, wie ein Zyklonabscheider 32 auf einer Montagehalterung 38 in ein Gehäuse eingebaut werden kann. Die Montagehalterung 38 wird auf eine Führungsnase 20 aufgelegt, wobei die Führungsnase 20 an der Seitenwand 15 angeordnet ist. Direkt oberhalb der Führungsnase 20 befindet sich ein Montageflansch 19. Der Zyklonabscheider 32 liegt waagerecht und wird nun von der Führungsnase 20 unterstützt. Es können auch mehr als eine Führungsnase 20 angeordnet sein, die insbesondere auch auf unterschiedlichen Höhen angeordnet sein können, um zur Einbauposition der FIG 3 zu gelangen. Um den Zyklonabscheider 32 nun in das Gehäuse 10 einzubauen, wird die Montagehalterung 38 auf der der Führungsnase 20 abgewandten Seite nach oben in Richtung Oberseite 11 und von der Oberseite 11 ausgehendem Montageflansch 19 bewegt. Anschließend liegt die Montagehalterung 38 an den Montageflanschen 19 an und kann nun an den Montageflanschen 19 befestigt werden, beispielsweise mittels Schrauben. Mit einem Pfeil ist in FIG 7 die dazu notwendige Bewegung der Montagehalterung angedeutet.

FIG 8 zeigt eine Detailansicht eines Auflagerahmens 43, der zur Aufnahme eines Oberflächenfilters 42 und/oder eines Tiefenfilters 42 dient. Ein solcher Auflagerahmen 43 kann auf Höhe der zweiten Reinigungsstufe 40 in das Gehäuse 10 eingesetzt sein. Der Auflagerahmen 43 kann mit dem Gehäuse 10 verschraubt oder verschweißt sein Der Oberflächenfilter 42 wird in den Auflagerahmen 43 eingesetzt und dort fixiert. Es können mehrere solcher Auflagerahmen 43 nebeneinander für mehrere Oberflächenfilter 42 und/oder Tiefenfilter 42 vorgesehen sein.

Die Fixierung des Oberflächenfilters 42 und/oder Tiefenfilters 42 im Auflagerahmen 43 kann mittels Befestigungsmittel, insbesondere Schrauben und/oder Klemmrahmen erfolgen.

Der Auflagerahmen 43 weist drei Auflageflächen 44 auf, die in einem Rechteck mit einer fehlenden Seite 45 angeordnet sind. Der Oberflächenfilter 42 kann, wie in FIG 8 durch einen Pfeil angedeutet, über die fehlende Seite 45 in den Auflagerahmen 43 eingeschoben werden. Die fehlende Seite 45 kann dabei der Vorderseite 13 des Gehäuses 10 zugewandt sein, wodurch ein Einsetzen und Entnehmen des Oberflächenfilters 42 in das Gehäuse 10 des Belüftungsmoduls 1 vereinfacht wird. Analog kann ein Tiefenfilter in den Auflagerahmen 43 eingesetzt werden.

Es kann vorgesehen sein, dass eine erste Abmessung der zweiten Reinigungsstufe 40 von der Vorderseite 13 des Gehäuses 10 bis zum Staubaustragskanal 50, insbesondere bis zur Kanalzwischenwand 51, zwischen vierzig und achtzig Prozent der Tiefe des Gehäuses 10 einnimmt, wobei die Tiefe des Gehäuses 10 die Abmessung zwischen Vorderseite 13 und Rückseite 14 des Gehäuses 10 ist. Bevorzugt ist die erste Abmessung zwischen fünfzig und siebzig Prozent der Tiefe des Gehäuses 10. Dadurch steht einerseits ausreichend Platz für die zweite Reinigungsstufe 40 und andererseits genügend Platz für den Staubaustragskanal 50 zur Verfügung.

Die erste Reinigungsstufe 30 kann bis zu neunzig Prozent der Tiefe des Gehäuses 10 einnehmen, bevorzugt zwischen sechzig und achtzig Prozent.

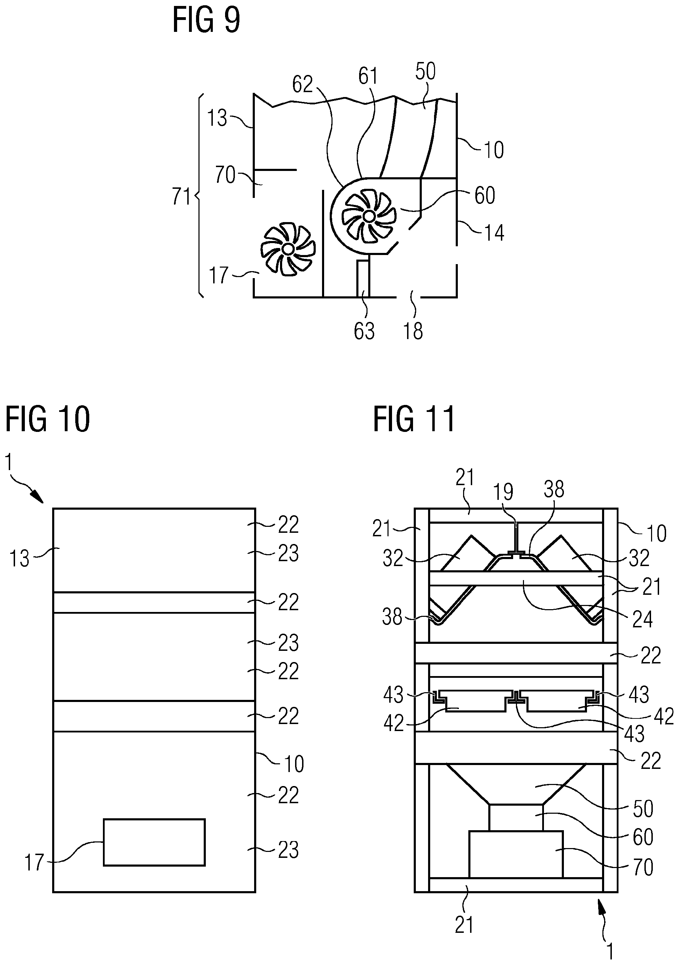

FIG 9 zeigt eine Detailansicht des unteren Bereichs 71 des Gehäuses 10. Der Maschinenraumlüfter 70 ist der Vorderseite 13 des Gehäuses 10 zugewandt. Der Staubaustragslüfter 60 ist der Rückseite des Gehäuses zugewandt. Der Staubaustragslüfter 60 weist ein Lüftergehäuse 61 mit einer abgerundeten Außenwand 62 auf. Dies dient der einfacheren Wartung des Belüftungsmoduls 1. Durch Partikel, insbesondere Sand, die über den Staubaustragskanal 50 zum Staubaustragslüfter 60 gelangen, kann der Staubaustragslüfter 60 beschädigt werden. Nach einem Ausbau des Maschinenraumlüfters 70 kann ein Brett in den unteren Bereich 71 des Gehäuses 10 eingesetzt werden. Hierzu kann ein Vorsprung 63 unterhalb des Staubaustragslüfters 60 vorgesehen sein. Mittels der abgerundeten Außenwand 62 kann nun der Staubaustragslüfter 60 in Richtung der Vorderseite 13 des Gehäuses 10 gerollt werden und von dort zu Wartungszwecken entnommen werden.

Die Partikel, insbesondere Sand, die über den Staubaustragskanal 50 zum Staubaustragslüfter 60 gelangen, können auch Teile des Staubaustragskanals 50 beschädigen. Aus diesem Grund kann es vorgesehen sein, den Staubaustragskanal 50 so auszuführen, dass Teile des Staubaustragskanals 50 entnehmbar sind, beispielsweise die Kanalzwischenwand 51.

FIG 10 zeigt eine Draufsicht auf ein drittes Ausführungsbeispiel des Belüftungsmoduls 1. Das Gehäuse 10 des Belüftungsmodul 1 umfasst eine tragende Rahmenstruktur und Wandelemente 22. In der Draufsicht sind fünf Wandelemente 22 zu sehen, die die Vorderseite 13 des Gehäuses 10 bilden. Die Oberseite 11, die Unterseite 12, die Rückseite 14 und die Seitenwände 15 können ebenfalls mittels Wandelementen 22 ausgeführt sein. Der Luftauslass 17 ist in einem der Wandelemente 22 angeordnet. Ebenso können Lufteinlass 16 und Staubaustragsöffnung 18 in Wandelementen 22 angeordnet sein.

Drei der Wandelemente 22 sind lösbare Wandelemente 23 und können vom Gehäuse 10 entfernt werden. Die lösbaren Wandelemente 23 können beispielsweise verschraubt sein. Dies ermöglicht die Bereitstellung eines Wartungszugangs. Nicht lösbare Wandelemente 22 können beispielsweise auch mit der tragenden Rahmenstruktur verschweißt sein.

Etwaige Schäkel oder Ösen, die einer Anhebung des Belüftungsmoduls 1 dienen, können an der tragenden Rahmenstruktur angebracht sein.

FIG 11 zeigt das Belüftungsmodul der FIG 10, bei dem die drei lösbaren Wandelemente 23 entfernt wurden. Dadurch wird die tragende Rahmenstruktur 21 sichtbar, die der Bereitstellung einer stabilen Tragstruktur des Gehäuses 10 dient. Ferner ist das Innenleben des Belüftungsmoduls 1 sichtbar. Das Belüftungsmodul 1 weist zwei als Multizyklone ausgeführte Zyklonabscheider 32, die mittels Montagehalterungen 38 an Montageflanschen 19 analog zu FIG 7 befestigt sind, auf. Die Oberflächenfilter 42 und/oder Tiefenfilter 42 sind, wie in FIG 8 gezeigt, in einen Auflagerahmen 43 eingesetzt. Dabei sind zwei Oberflächenfilter 42 nebeneinander angeordnet. Alternativ können auch Tiefenfilter 42 vorgesehen sein. Ferner sind Staubaustragskanal 50, Staubaustragslüfter 60 und Maschinenraumlüfter 70 wie in FIG 1 gezeigt angeordnet.

Durch das Entfernen der lösbaren Wandelemente 23 sind Zyklonabscheider 32, Oberflächenfilter 42 sowie Staubaustragslüfter 60 und Maschinenraumlüfter 70 von der Vorderseite 13 des Gehäuses her zugänglich und können entsprechend gewartet werden.

Vor den Zyklonabscheidern 32 ist eine entnehmbare Querstrebe 24 angeordnet. Die entnehmbare Querstrebe 24 ist Bestandteil der tragenden Rahmenstruktur 21. Um die Zyklonabscheider 32 zu warten, kann die entnehmbare Querstrebe 24 entnommen werden. Alternativ kann die tragende Rahmenstruktur 21 ohne die entnehmbare Querstrebe 24 ausgeführt sein. Die Anordnung der tragenden Rahmenstruktur 21 und der entnehmbaren Querstrebe 24 können anders als in FIG 11 dargestellt ausgeführt sein.

In den gezeigten Ausführungsbeispielen ist der Lufteinlass 16 im oberen Bereich 31 des Gehäuses 10 an der Oberseite 11 angeordnet. Alternativ kann der Lufteinlass auch an der Rückseite 13 oder einer Seitenwand 15 angeordnet sein. Der Luftauslass 17 ist an der Vorderseite 13 des Gehäuses 10 angeordnet. Alternativ kann der Luftauslass 17 auch an einer Seitenwand 15 angeordnet sein. Die Staubaustragsöffnung 18 ist an der Unterseite 12 des Gehäuses 10 angeordnet. Alternativ kann die Staubaustragsöffnung 18 auch im unteren Beriech 71 an der Rückseite 13 des Gehäuses 10 angeordnet sein.

Es kann vorgesehen sein, dass das Belüftungsmodul 1 eingerichtet ist, einen Volumenstrom von eineinhalb Kubikmeter Luft pro Sekunde bereitzustellen. Mittels der ersten Reinigungsstufe 30 werden mindestens fünfundachtzig Prozent eines vorgegebenen Teststaubs aus dem Volumenstrom entfernt. Die zweite Reinigungsstufe 40 kann bei einer Druckänderung von maximal dreihundert Pascal mindestens dreihundert Gramm des vorgegebenen Teststaubs aufnehmen. Mit einem solchen Belüftungsmodul 1 ist ein Schienenfahrzeug in Wüstenregionen betreibbar, wobei eine ausreichend lange Standzeit des Oberflächenfilters 42 und/oder Tiefenfilters 42 möglich ist. Durch die Verwendung besserer Zyklonabscheider 32 und/oder besserer oder mehr Oberflächenfilter 42 und/oder Tiefenfilter 42 kann die Standzeit weiter verlängert werden. Als vorgegebener Teststaub kann dabei der als "ISO 12103-1 A4 grob" definierte Teststaub eingesetzt werden.

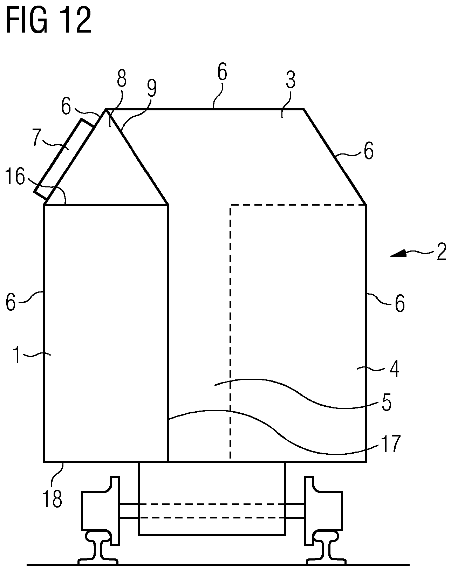

FIG 12 zeigt einen Querschnitt durch ein Schienenfahrzeug 2, bei dem ein Maschinenraum 3 ein erfindungsgemäßes Belüftungsmodul 1 und ein weiteres Modul 4 umfasst. Zwischen Belüftungsmodul 1 und dem Modul 4 ist ein Gang 5 angeordnet, der zu Wartungszwecken dient. Werden für das Belüftungsmodul die oben angegebenen Abmessungen verwendet und ebenso für das Modul 4, kann ein etwa sechzig Zentimeter breiter Gang 5 bereitgestellt werden. Der Lufteinlass 16 des Belüftungsmoduls 1 ist mit einer Außenwand 6 des Schienenfahrzeugs 2 über einen Kanal 8, der mittels einer Trennwand 9 vom Maschinenraum 3 getrennt ist, verbunden. Der Luftauslass 17 des Belüftungsmoduls ist dem Maschinenraum 3 zugewandt. Dadurch kann über den Kanal 8 angesaugte Luft im Belüftungsmodul 1 wie beschrieben gereinigt und anschließend im Maschinenraum 3 als Kühlluft und/oder zur Bereitstellung von Sauerstoff für einen Verbrennungsantrieb genutzt werden.

An der Stelle, an der der Kanal 8 auf die Außenwand 6 trifft, ist ein optionales Wetterschutzgitter 7 angebracht, dass einer zusätzlichen Reinigung der angesaugten Luft, insbesondere der Entfernung von Wasser, dient.

Das Schienenfahrzeug 2 kann so ausgeführt sein, dass die Außenwand 6 oberhalb des Belüftungsmoduls 1 geöffnet werden kann, um das Belüftungsmodul 1 aus dem Schienenfahrzeug zu entfernen. Dann kann beispielsweise zu Wartungszwecken das Belüftungsmodul 1 entfernt und ein anderes Belüftungsmodul 1 eingebaut werden.

Das Schienenfahrzeug 2 steht dann wieder für Einsätze bereit, während Reparaturen am entfernten Belüftungsmodul 1 vorgenommen werden.

Damit Staub und/oder Partikel, die vom Belüftungsmodul 1 über die Staubaustragsöffnung 18 verlassen, aus dem Schienenfahrzeug 2 entfernt werden können, kann dort eine Öffnung im Maschinenraum 3 vorgesehen sein, durch die der Staub beziehungsweise die Partikel nach unten aus dem Schienenfahrzeug 2 fallen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen im Rahmen der Ansprüche 2- können vom Fachmann hieraus abgeleitet werden, ohne den Schutzumfang der Erfindung zu verlassen.

## Patentansprüche

1. Belüftungsmodul (1) für ein Schienenfahrzeug (2), umfassend
ein Gehäuse (10) mit einer Oberseite (11), einer Unterseite (12), einer Vorderseite (13), einer der Vorderseite (13) gegenüberliegenden Rückseite (14) und zwei Seitenwänden (15), wobei das Gehäuse (10) einen Lufteinlass (16), einen Luftauslass (17) und eine Staubaustragsöffnung (18) aufweist,
eine erste Reinigungsstufe (30) in einem oberen Bereich (31) des Gehäuses (10), wobei die erste Reinigungsstufe (30) einen Zyklonabscheider (32) aufweist, wobei der Zyklonabscheider (32) einen Staubauslass (33) und einen Zyklonluftauslass (34) aufweist,
eine zweite Reinigungsstufe (40) in einem mittleren Bereich (41) des Gehäuses (10), wobei die zweite Reinigungsstufe (40) unterhalb der ersten Reinigungsstufe derart angeordnet ist, dass Luft vom Zyklonluftauslass (34) zur zweiten Reinigungsstufe gelangen kann, wobei die zweite Reinigungsstufe (40) einen Oberflächenfilter (42) und/oder einen Tiefenfilter (42) aufweist, wobei der Oberflächenfilter (42) und/oder der Tiefenfilter (42) der Vorderseite (13) des Gehäuses (10) zugewandt ist,
einen Staubaustragskanal (50), wobei der Staubaustragskanal (50) mit dem Staubauslass (33) des Zyklonabscheiders (32) verbunden ist, wobei der Staubaustragskanal (50) im mittleren Bereich (41) des Gehäuses (10) angeordnet ist, wobei der Staubaustragskanal (50) der Rückseite (14) des Gehäuses (10) zugewandt ist,
einen Staubaustragslüfter (60), der eingerichtet ist, Luft und Staub aus dem Staubaustragskanal (50) anzusaugen und durch die Staubaustragsöffnung (18) aus dem Gehäuse (10) zu entfernen,
einen Maschinenraumlüfter (70), der in einem unteren Bereich (71) des Gehäuses (10) unterhalb der zweiten Reinigungsstufe angeordnet ist, wobei der Maschinenraumlüfter (70) eingerichtet ist, Luft durch die zweite Reinigungsstufe (40) anzusaugen und über den Luftauslass (17) abzugeben.

2. Belüftungsmodul (1) nach Anspruch 1, wobei der Zyklonabscheider (32) ein Multizyklon mit mehreren, in einer Ebene angeordneten, Axialabscheidern (39) ist.

3. Belüftungsmodul (1) nach Anspruch 2, wobei die Ebene in einem Winkel von 0 bis 45 Grad gegenüber einer der beiden Seitenwände (15) angeordnet ist.

4. Belüftungsmodul (1) nach Anspruch 2 oder 3, wobei der Multizyklon an der Vorderseite (13) des Gehäuses (10) weiter oben angeordnet ist als an einer der Rückseite (14) des Gehäuses (10) zugewandten Zyklongehäuserückseite (36), wobei ein Wasserauslass (37) des Multizyklons mit dem Staubaustragskanal (50) verbunden ist.

5. Belüftungsmodul (1) nach einem der Ansprüche 2 bis 4, wobei der Multizyklon auf einer Montagehalterung (38) angeordnet ist, wobei die Montagehalterung (38) an Montageflanschen (19) im Gehäuse (10) befestigt werden kann, wobei Führungsnasen (20) im Gehäuse (10) angeordnet sind, wobei zur Befestigung der Montagehalterung (38) die Montagehalterung (38) mit dem Multizyklon auf den Führungsnasen (20) abgelegt werden kann und anschließend in eine Montageposition gebracht werden kann.

6. Belüftungsmodul (1) nach einem der Ansprüche 1 bis 5, wobei das Gehäuse (10) im mittleren Bereich (41) einen Auflagerahmen (43) für den Oberflächenfilter (42) und/oder den Tiefenfilter (42) aufweist, wobei der Oberflächenfilter (42) und/oder der Tiefenfilter (42) in den Auflagerahmen (43) eingesetzt und dort fixiert werden kann.

7. Belüftungsmodul (1) nach Anspruch 6, wobei der Auflagerahmen (43) drei Auflageflächen (44) aufweist, wobei die Auflageflächen (44) in einem Rechteck mit einer fehlenden Seite (45) angeordnet sind, wobei der Oberflächenfilter (42) und/oder der Tiefenfilter (42) über die fehlende Seite (45) in den Auflagerahmen (43) eingeschoben werden kann.

8. Belüftungsmodul (1) nach einem der Ansprüche 1 bis 7, wobei eine erste Abmessung der zweiten Reinigungsstufe von der Vorderseite (13) des Gehäuses (10) bis zum Staubaustragskanal (50) zwischen vierzig und achtzig Prozent der Tiefe des Gehäuses (10) einnimmt, wobei die Tiefe des Gehäuses (10) die Abmessung zwischen Vorderseite (13) und Rückseite (14) des Gehäuses (10) ist.

9. Belüftungsmodul (1) nach einem der Ansprüche 1 bis 8, wobei der Staubaustragslüfter (60) der Rückseite (14) des Gehäuses (10) zugewandt ist, wobei der Maschinenraumlüfter (70) der Vorderseite (13) des Gehäuses (10) zugewandt ist, und wobei der Staubaustragslüfter (60) ein Lüftergehäuse (61) mit einer abgerundeten Außenwand (62) aufweist.

10. Belüftungsmodul (1) nach einem der Ansprüche 1 bis 9, wobei das Gehäuse (10) eine tragende Rahmenstruktur (21) und Wandelemente (22) umfasst, wobei die Wandelemente (22) die Oberseite (11), die Unterseite (12), die Vorderseite (13), die Rückseite (14) und die Seitenwände (15) bilden, wobei der Lufteinlass (16), der Luftauslass (17) und die Staubaustragsöffnung (18) in Wandelementen (22) angeordnet sind und das Gehäuse (10) ansonsten abgedichtet ist.

11. Belüftungsmodul (1) nach Anspruch 10, wobei Wandelemente (22) der Vorderseite (13) lösbar sind, um Zugriff in das Gehäuse (10) zu ermöglichen.

12. Belüftungsmodul (1) nach Anspruch 11, wobei die tragende Rahmenstruktur (21) eine der Vorderseite (13) zugewandte entnehmbare Querstrebe (24) aufweist.

13. Belüftungsmodul (1) nach einem der Ansprüche 1 bis 12, wobei der Lufteinlass (16) im oberen Bereich (31) des Gehäuses (10) an der Oberseite (11) und/oder der Rückseite (14) des Gehäuses (10) angeordnet ist, wobei der Luftauslass (17) an der Vorderseite (13) des Gehäuses (10) angeordnet ist und wobei die Staubaustragsöffnung (18) an der Unterseite (12) des Gehäuses (10) angeordnet ist.

14. Belüftungsmodul (1) nach einem der Ansprüche 1 bis 13, wobei das Belüftungsmodul (1) einen Volumenstrom von eineinhalb Kubikmeter Luft pro Sekunde bereitstellt, wobei mittels der ersten Reinigungsstufe (30) mindestens 85 Prozent eines vorgegebenen Teststaubs aus dem Volumenstrom entfernt werden können und wobei die zweite Reinigungsstufe (40) bei einer Druckänderung von maximal 300 Pascal mindestens 300 Gramm des vorgegebenen Teststaubs aufnehmen kann.

15. Schienenfahrzeug (2) mit einem Belüftungsmodul (1) nach einem der Ansprüche 1 bis 14, wobei der Lufteinlass (16) mit einer Außenwand (6) des Schienenfahrzeugs (2) verbunden ist, wobei die Außenwand (6) an einer Stelle, die mit dem Lufteinlass (16) verbunden ist, ein Wetterschutzgitter (7) aufweisen kann.

## Claims

1. Ventilation module (1) for a rail vehicle (2), comprising
a housing (10) with a top side (11), a bottom side (12), a front side (13), a rear side (14) opposite the front side (13) and two side walls (15), wherein the housing (10) has an air inlet (16), an air outlet (17) and a dust discharge opening (18),
a first cleaning stage (30) in an upper region (31) of the housing (10), wherein the first cleaning stage (30) has a cyclone separator (32), wherein the cyclone separator (32) has a dust outlet (33) and a cyclone air outlet (34),
a second cleaning stage (40) in a central region (41) of the housing (10), wherein the second cleaning stage (40) is arranged below the first cleaning stage in such a way that air from the cyclone air outlet (34) can pass to the second cleaning stage, wherein the second cleaning stage (40) has a surface filter (42) and/or a depth filter (42), wherein the surface filter (42) and/or the depth filter (42) faces toward the front side (13) of the housing (10),
a dust discharge channel (50), wherein the dust discharge channel (50) is connected to the dust outlet (33) of the cyclone separator (32), wherein the dust discharge channel (50) is arranged in the central region (41) of the housing (10), wherein the dust discharge channel (50) faces toward the rear side (14) of the housing (10),
a dust discharge fan (60) which is configured to draw in air and dust from the dust discharge channel (50) and to remove them from the housing (10) through the dust discharge opening (18),
a machine room fan (70) which is arranged in a lower region (71) of the housing (10) below the second cleaning stage, wherein the machine room fan (70) is configured to draw in air through the second cleaning stage (40) and to release said air via the air outlet (17).

2. Ventilation module (1) according to Claim 1, wherein the cyclone separator (32) is a multicyclone with multiple axial separators (39) arranged in one plane.

3. Ventilation module (1) according to Claim 2, wherein the plane is arranged at an angle of 0 to 45 degrees with respect to one of the two side walls (15).

4. Ventilation module (1) according to Claim 2 or 3, wherein the multicyclone is arranged higher up on the front side (13) of the housing (10) than on a cyclone housing rear side (36) which faces toward the rear side (14) of the housing (10), wherein a water outlet (37) of the multicyclone is connected to the dust discharge channel (50).

5. Ventilation module (1) according to any of Claims 2 to 4, wherein the multicyclone is arranged on a mounting bracket (38), wherein the mounting bracket (38) can be fastened to mounting flanges (19) in the housing (10), wherein guide lugs (20) are arranged in the housing (10), wherein, for fastening the mounting bracket (38), the mounting bracket (38) with the multicyclone can be placed onto the guide lugs (20) and subsequently can be brought into a mounting position.

6. Ventilation module (1) according to any of Claims 1 to 5, wherein the housing (10) has, in the central region (41), a support frame (43) for the surface filter (42) and/or the depth filter (42), wherein the surface filter (42) and/or the depth filter (42) can be inserted into the support frame (43) and fixed there.

7. Ventilation module (1) according to Claim 6, wherein the support frame (43) has three support surfaces (44), wherein the support surfaces (44) are arranged in a rectangle with a missing side (45), wherein the surface filter (42) and/or the depth filter (42) can be pushed into the support frame (43) via the missing side (45).

8. Ventilation module (1) according to any of Claims 1 to 7, wherein a first dimension of the second cleaning stage from the front side (13) of the housing (10) to the dust discharge channel (50) is between forty and eighty percent of the depth of the housing (10), wherein the depth of the housing (10) is the dimension between the front side (13) and the rear side (14) of the housing (10).

9. Ventilation module (1) according to any of Claims 1 to 8, wherein the dust discharge fan (60) faces toward the rear side (14) of the housing (10), wherein the machine room fan (70) faces toward the front side (13) of the housing (10), and wherein the dust discharge fan (60) has a fan housing (61) with a rounded outer wall (62).

10. Ventilation module (1) according to any of Claims 1 to 9, wherein the housing (10) comprises a load-bearing frame structure (21) and wall elements (22), wherein the wall elements (22) form the top side (11), the bottom side (12), the front side (13), the rear side (14) and the side walls (15), wherein the air inlet (16), the air outlet (17) and the dust discharge opening (18) are arranged in wall elements (22) and the housing (10) is otherwise sealed.

11. Ventilation module (1) according to Claim 10, wherein wall elements (22) of the front side (13) are detachable in order to allow access into the housing (10).

12. Ventilation module (1) according to Claim 11, wherein the load-bearing frame structure (21) has a removable cross brace (24) which faces toward the front side (13).

13. Ventilation module (1) according to any of Claims 1 to 12, wherein the air inlet (16) is arranged in the upper region (31) of the housing (10) on the top side (11) and/or the rear side (14) of the housing (10), wherein the air outlet (17) is arranged on the front side (13) of the housing (10) and wherein the dust discharge opening (18) is arranged on the bottom side (12) of the housing (10).

14. Ventilation module (1) according to any of Claims 1 to 13, wherein the ventilation module (1) provides a volume flow of one and a half cubic meters of air per second, wherein at least 85 percent of a specified test dust can be removed from the volume flow by means of the first cleaning stage (30), and wherein the second cleaning stage (40) can, with a pressure change of at most 300 Pascal, receive at least 300 grams of the specified test dust.

15. Rail vehicle (2) having a ventilation module (1) according to any of Claims 1 to 14, wherein the air inlet (16) is connected to an outer wall (6) of the rail vehicle (2), wherein the outer wall (6) may have a weather protection grille (7) at a point which is connected to the air inlet (16).

## Revendications

1. Module de ventilation (1) pour un véhicule ferroviaire (2), comprenant :
un boîtier (10) avec une face supérieure (11), une face inférieure (12), une face avant (13), une face arrière (14) en vis-à-vis de à la face avant (13) et deux parois latérales (15), le boîtier (10) comportant une entrée d'air (16), une sortie d'air (17) et un orifice d'évacuation de poussière (18) ;
un premier étage de purification (30) dans une partie supérieure (31) du boîtier (10), le premier étage de purification (30) comportant un séparateur cyclone (32), le séparateur cyclone (32) comportant une sortie de poussière (33) et une sortie d'air cyclone (34) ;
un deuxième étage de purification (40) dans une partie centrale (41) du boîtier (10), le deuxième étage de purification (40) étant agencé en dessous du premier étage de purification de telle sorte que de l'air peut aller de la sortie d'air cyclone (34) vers le deuxième étage de purification, le deuxième étage de purification (40) comportant un filtre de surface (42) et/ou un filtre en profondeur (42), le filtre de surface (42) et/ou le filtre en profondeur (42) étant tourné vers la face avant (13) du boîtier (10) ;
un canal d'évacuation de poussière (50), le canal d'évacuation de poussière (50) étant relié à la sortie de poussière (33) du séparateur cyclone (32), le canal d'évacuation de poussière (50) étant agencé dans la partie centrale (41) du boîtier (10), le canal d'évacuation de poussière (50) étant tourné vers la face arrière (14) du boîtier (10) ;
un ventilateur d'évacuation de poussière (60) qui est configuré pour aspirer de l'air et de la poussière du canal d'évacuation de poussière (50) et les éliminer du boîtier (10) par l'orifice d'évacuation de poussière (18) ;
un ventilateur de chambre des machines (70) qui est agencé dans une partie inférieure (71) du boîtier (10) en dessous du deuxième étage de purification, le ventilateur de chambre des machines (70) étant configuré pour aspirer de l'air par le deuxième étage de purification (40) et le délivrer via la sortie d'air (17).

2. Module de ventilation (1) selon la revendication 1, le séparateur cyclone (32) étant un multicyclone avec plusieurs séparateurs axiaux (39) agencés dans un plan.

3. Module de ventilation (1) selon la revendication 2, le plan étant agencé selon un angle de 0 à 45 degrés par rapport à l'une des deux parois latérales (15).

4. Module de ventilation (1) selon la revendication 2 ou 3, le multicyclone étant agencé, sur la face avant (13) du boîtier (10), plus haut que sur une face arrière du boîtier cyclone (36) tournée vers la face arrière (14) du boîtier (10), une sortie d'eau (37) du multicyclone étant reliée au canal d'évacuation de poussière (50).

5. Module de ventilation (1) selon l'une des revendications 2 à 4, le multicyclone étant agencé sur un support de montage (38), le support de montage (38) pouvant être fixé à des brides de montage (19) dans le boîtier (10), des saillies de guidage (20) étant agencées dans le boîtier (10), le support de montage (38) avec le multicyclone pouvant, aux fins de la fixation du support de montage (38), être posé sur les saillies de guidage (20) et pouvant ensuite être mis dans une position de montage.

6. Module de ventilation (1) selon l'une des revendications 1 à 5, le boîtier (10) comportant, dans la partie centrale (41), un cadre d'appui (43) pour le filtre de surface (42) et/ou le filtre en profondeur, le filtre de surface (42) et/ou le filtre en profondeur (42) pouvant être insérés dans le cadre d'appui (43) et y être fixés.

7. Module de ventilation (1) selon la revendication 6, le cadre d'appui (43) présentant trois surfaces d'appui (44), les surfaces d'appui (44) étant agencées en rectangle avec un côté manquant (45), le filtre de surface (42) et/ou le filtre en profondeur (42) pouvant être glissés dans le cadre d'appui (43) par le côté manquant (45).

8. Module de ventilation (1) selon l'une des revendications 1 à 7, une première dimension du deuxième étage de purification, de la face avant (13) du boîtier (10) au canal d'évacuation de poussière (50), occupant entre quarante et quatre-vingts pour cent de la profondeur du boîtier (10), la profondeur du boîtier (10) étant la dimension entre la face avant (13) et la face arrière (14) du boîtier (10).

9. Module de ventilation (1) selon l'une des revendications 1 à 8, le ventilateur d'évacuation de poussière (60) étant tourné vers la face arrière (14) du boîtier (10), le ventilateur de chambre des machines (70) étant tourné vers la face avant (13) du boîtier (10), et le ventilateur d'évacuation de poussière (60) comportant un boîtier de ventilateur (61) avec une paroi extérieure (62) arrondie.

10. Module de ventilation (1) selon l'une des revendications 1 à 9, le boîtier (10) comprenant une structure de cadre portante (21) et des éléments de paroi (22), les éléments de paroi (22) formant la face supérieure (11), la face inférieure (12), la face avant (13), la face arrière (14) et les parois latérales (15), l'entrée d'air (16), la sortie d'air (17) et l'orifice d'évacuation de poussière (18) étant agencés dans des éléments de paroi (22) et le boîtier (10) étant par ailleurs étanche.

11. Module de ventilation (1) selon la revendication 10, des éléments de paroi (22) de la face avant (13) étant amovibles pour permettre l'accès au boîtier (10).

12. Module de ventilation (1) selon la revendication 11, la structure de cadre portante (21) présentant une traverse (24) qui peut être retirée et qui est tournée vers la face avant (13).

13. Module de ventilation (1) selon l'une des revendications 1 à 12, l'entrée d'air (16) étant agencée dans la partie supérieure (31) du boîtier (10) sur la face supérieure (11) et/ou la face arrière (14) du boîtier (10), la sortie d'air (17) étant agencée sur la face avant (13) du boîtier (10) et l'orifice d'évacuation de poussière (18) étant agencé sur la face inférieure (12) du boîtier (10).

14. Module de ventilation (1) selon l'une des revendications 1 à 13, le module de ventilation (1) fournissant un débit d'un mètre cube et demi d'air par seconde, au moins 85 pour cent d'une poussière d'essai donnée pouvant être retirée du débit au moyen du premier étage de purification (30) et le deuxième étage de purification (40) pouvant capter au moins 300 grammes de la poussière d'essai donnée en cas de modification de pression de 300 pascals au maximum.

15. Véhicule ferroviaire (2) avec un module de ventilation (1) selon l'une des revendications 1 à 14, l'entrée d'air (16) étant reliée à une paroi extérieure (6) du véhicule ferroviaire (2), la paroi extérieure (6) pouvant comporter une grille de protection contre les intempéries à un endroit qui est relié à l'entrée d'air (16) .
